# EUROPEAN PATENT APPLICATION

(11) **EP 1 376 334 A2**
(43) Date of publication of application: **02.01.2004**
(21) Application number: 03005648.5
(22) Date of filing: 12.03.2003
(51) Int. Cl.: G06F 3/14

(54) **Information processing apparatus**

(30) Priority: 31.05.2002 JP 2002159989
(71) Applicant: Kabushiki Kaisha Toshiba, Tokyo (JP)
(72) Inventor: Numano, Fujihito, 1-chome, Minato-ku, Tokyo 105-8001 (JP); Tokunaga, Akinori, 1-chome, Minato-ku, Tokyo 105-8001 (JP)
(74) Representative: Henkel, Feiler, Hänzel

(57) **Abstract**

An information processing apparatus which has means (33) for granting an application program which outputs a use request of a sub-display, of a plurality of application programs (31, 32) that use a sub-display, a use right, and means (33) for sending a message indicating that the sub-display cannot be used in response to a use request for the sub-display from a program other than the application program granted the use right.

## Description

The present invention relates to an information processing apparatus which comprises a sub-display in addition to a main display and, more particularly, to an information processing apparatus that runs a plurality of application programs that use the sub-display.

In recent years, an information processing apparatus which has a sub-display in addition to a main display has been developed. In such information processing apparatus, information different from that to be displayed on the main display is displayed on the sub-display, thus improving the operability of the information processing apparatus.

For example, Jpn. Pat. Appln. KOKAI Publication No. 2000-339097 discloses an information processing apparatus which comprises a sub-display having a tablet function. According to this information processing apparatus, a technique for making a clock display and inputting an image on the sub-display is disclosed.

However, when a plurality of application programs that use the sub-display run on the conventional information processing apparatus, and information used by one of these application programs is displayed on the sub-display, an operation for switching the application programs that use the sub-display is required.

The present invention has been made in consideration of the above situation, and provides an information processing apparatus, which can display information on a sub-display on the basis of a pre-set condition.

Embodiments of the present invention provide an information processing apparatus comprising a main display and a sub-display separate from the main display. The information processing apparatus further includes a processor programmed for granting a right to use the sub-display to a first application program, among a plurality of application programs, which first outputs a request to use the sub-display. The processor is further programmed for displaying information managed by the first application program on the sub-display. The processor is further programmed for preventing a second application program, among the plurality of application programs, from using the sub-display while the first application program has the right to use the sub-display.

Further embodiments of the present invention provide an information processing apparatus comprising a main display and a sub-display separate from the main display. The information processing apparatus further comprises a processor programmed for generating a data structure, the data structure including a plurality of first information items, each related to individual ones of a plurality of running application programs. The data structure further includes a plurality of second information items for display on the sub-display, ones of the plurality of second information items being associated in the data structure with ones of the plurality of first information items.

The processor is further programmed for detecting an active one of the plurality of application programs displaying on the sub-display ones of the second information items associated with ones of the first information items related to the active one of the plurality of application programs.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a front view showing the arrangement of an information processing apparatus according to an embodiment of the present invention;
FIG. 2 is a block diagram showing the system arrangement of a computer shown in FIG. 1;
FIG. 3 is a view for explaining the operation of a personal computer according to an embodiment of the present invention;
FIG. 4 is a flow chart for explaining the operation of a method of preferentially selecting an application program which uses a sub-display 116 first;
FIG. 5 shows a case wherein a window of a CD player program is hidden behind that of a wordprocessor program displayed on an LCD panel;
FIG. 6 shows information that pertains to a CD player, which is displayed on the sub-display;
FIG. 7 is a view for explaining a method of preferentially selecting an active application program;
FIG. 8 is a flow chart for explaining the operation of the information processing apparatus when an active application program is preferentially selected;
FIG. 9 shows a case wherein the user activates the window of the wordprocessor while the application window of the CD player is active; and
FIG. 10 shows switching from a window that displays information pertaining to the CD player to that which displays information pertaining to the wordprocessor on the sub-display.

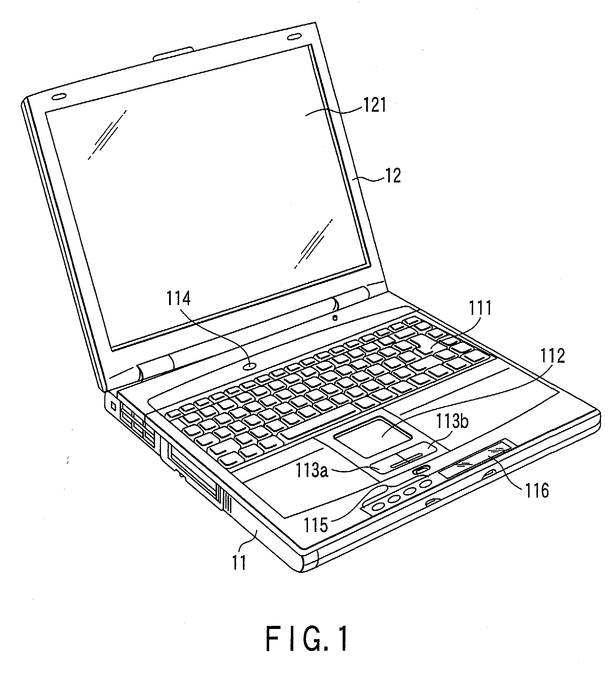

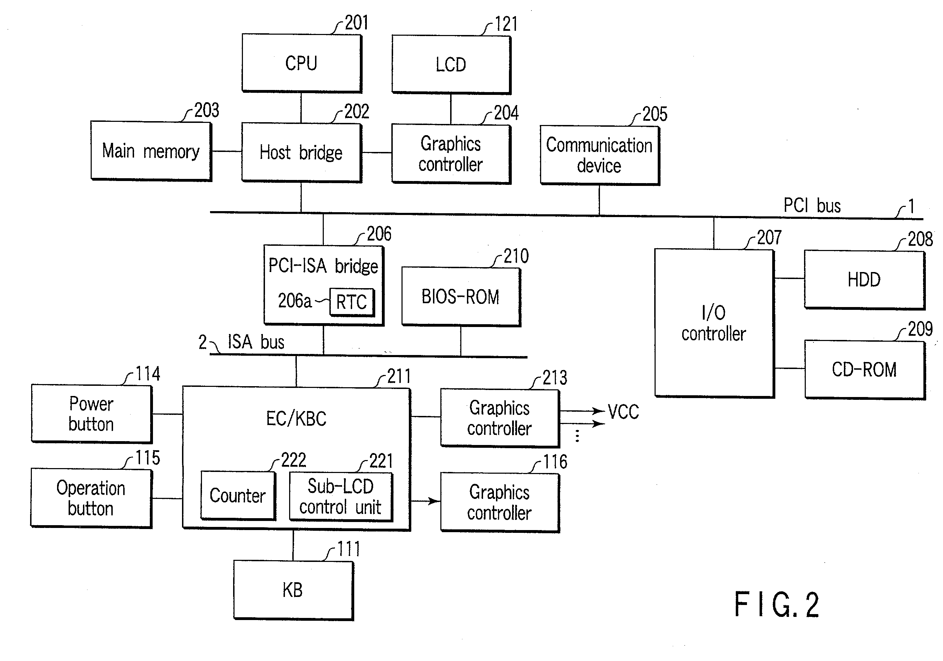

A preferred embodiment of the present invention will be described hereinafter with reference to the accompanying drawings. The arrangement of an information processing apparatus according to an embodiment of the present invention will be explained first with reference to FIGS. 1 and 2. Assume that the information processing apparatus is implemented as a notebook type personal computer.

FIG. 1 is a front view of the computer of the present invention when a display unit is open. This computer comprises a computer main body 11 and display unit 12. A display panel 121 is built in the display unit 12. Display panel 121 may be, for example, an LCD display panel. The display panel 121 is a main display device used as a display monitor of this computer. The display unit 12 is attached to the computer main body 11 to be pivotally moveable between opened and closed positions. The computer main body 11 has a low-profile, box-shaped housing. A keyboard 111, touch pad 112, left and right buttons 113a and 113b, and the like are arranged on the upper surface of the housing.

A power button 114 used to turn on/off the power supply of this computer is arranged on the back side of the upper surface of the computer main body 11. Furthermore, a plurality of operation buttons 115 and sub-display 116 are arranged on the front side of the upper surface of the computer main body 11. Sub-display 116 may be, for example, a liquid crystal display (LCD).

The plurality of operation buttons 115 are external input hardware buttons, and are used as dedicated buttons to start a specific program, to control audio playback, and the like. The sub-display 116 is a sub-display device provided to display various kinds of status of this computer. The sub-display 116 can display various kinds of system status such as connection/disconnection of an external AC power supply, access to a hard disk drive, and the like in addition to information that indicates the audio playback state.

When the display unit 12 is closed, the keyboard 111, touch pad 112, and left and right buttons 113a and 113b are covered by the display unit 12, but the plurality of operation buttons 115 and sub-display 116 remain externally exposed. As a result, the user can operate the plurality of operation buttons 115 and can watch the display on the sub-display 116 while the display unit 12 is closed.

FIG. 2 shows the system arrangement of this computer. As shown in FIG. 2, this computer comprises a CPU 201, host bridge 202, main memory 203, graphics controller 204, communication device 205, PCI-ISA bridge 206, I/O controller 207, hard disk drive (HDD) 208, CD-ROM drive 209, BIOS-ROM 210, embedded controller/keyboard controller IC (EC/KBC) 211, power supply controller 213, and the like.

The CPU 201 is provided to control the operation of this computer. The CPU 201 executes an operating system and application program/utility program, which are loaded from the hard disk drive (HDD) 208 onto the main memory 203. The CPU 201 also executes a BIOS stored in the BIOS-ROM 210.

The host bridge 202 is a bridge device that connects the local bus of the CPU 201 and a PCI bus 1 for bi-directional communication. The graphics controller 204 controls the display panel 121 used as a display monitor of this computer. The communication device 205 is one of PCI devices, and is used to establish connection to a computer network such as the Internet and the like. The I/O controller 207 is also one of PCI devices, and incorporates an IDE controller and the like, which are used to control the hard disk drive (HDD) 208 and CD-ROM drive 209.

The PCI-ISA bridge 206 is a bridge device that connects the PCI bus 1 and an ISA bus 2 for bi-directional communication. Also, the PCI-ISA bridge 206 incorporates various system devices such as a system timer, DMA controller, interrupt controller, and the like, in addition to a real time clock (RTC) 206a. The real time clock (RTC) 206a is a timepiece module that measures time, and manages time information such as year, month, day, day of the week, hour, minute, second, and the like. Time information of the real time clock (RTC) 206a is used as a reference date and time managed by the operating system. The real time clock (RTC) 206a runs all the time by its own battery.

The BIOS-ROM 210 stores the BIOS. This BIOS is a program for controlling hardware components in this system. The BIOS includes a function of reading time information from the real time clock (RTC) 206a, a function of controlling the embedded controller/keyboard controller IC (EC/KBC) 211 to correct the time to be displayed on the sub-display 116, and the like.

The embedded controller/keyboard controller IC (EC/KBC) 211 is a 1-chip microcomputer which integrates an embedded controller (EC) for power management and a keyboard controller (KBC) that controls the keyboard 111. The embedded controller/keyboard controller IC (EC/KBC) 211 has a function of turning on/off the power supply of this computer in response to an operation on the power button 114 in collaboration with the power supply controller 213. Furthermore, in this embodiment, the embedded controller/keyboard controller IC (EC/KBC) 211 includes an LCD control unit 221 that controls display on the sub-LCD 116, a counter 222 for sequentially generating a time value to be displayed on the sub-display 116 by counting up time information set by the BIOS or the like, as functional units used to display time information on the sub-display 116.

The embedded controller/keyboard controller IC (EC/KBC) 211 and sub-display 116 receive the operation power supply all the time, and a clock can always be displayed on the sub-display 116 even when the power supply of this computer is OFF.

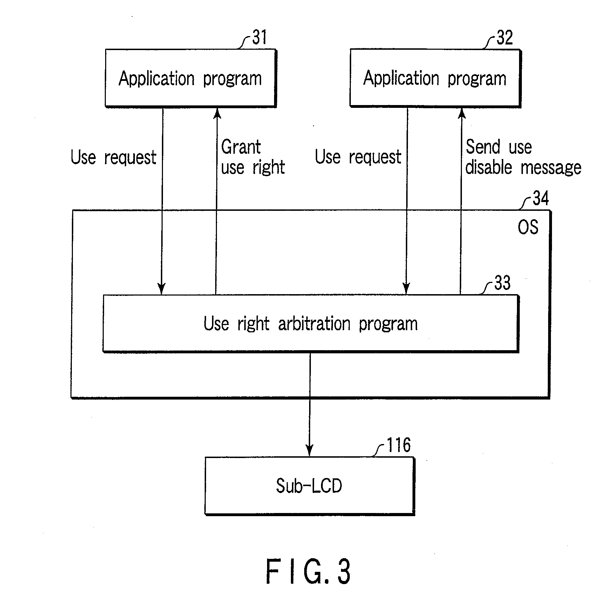

FIG. 3 is a view for explaining the operation of the personal computer according to an embodiment of the present invention.

Referring to FIG. 3, application programs 31 and 32 use the sub-display 116. A use right arbitration program 33 resides on an OS (Operating System) 34, and implements a process according to embodiments of the present invention. More specifically, by predetermined methods, the use right arbitration program 33 gives and manages priority order to the application programs 31 and 32 for displaying information on the sub-display 116.

Various methods of giving priority order may be used. According to embodiments of the present invention, a first method preferentially selects an application program that first uses the sub-display 116. A second method preferentially selects a currently active application program. Embodiments of these two methods will be explained in detail below.

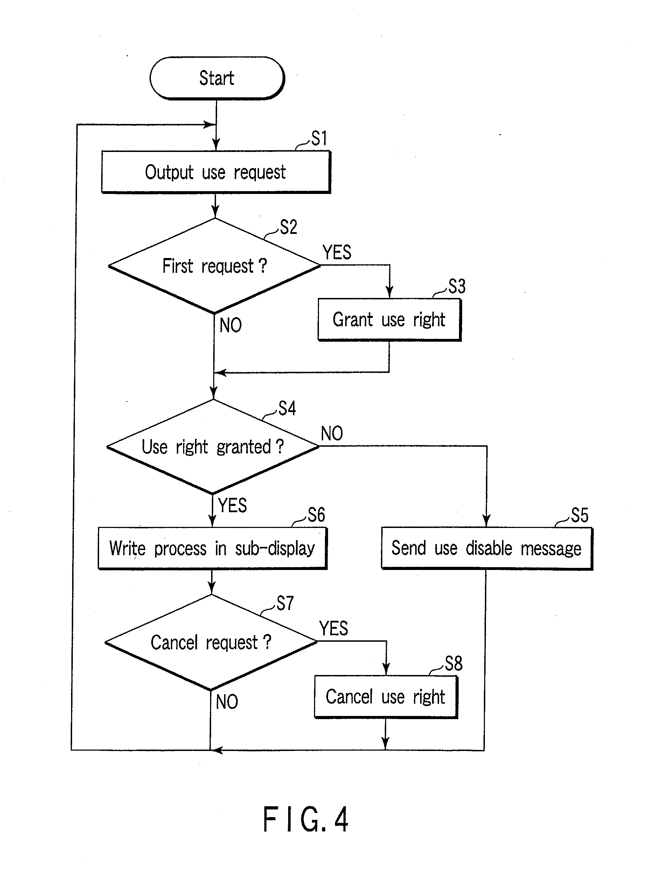

FIG. 4 is a flow chart for explaining an exemplary embodiment of the first method of preferentially selecting an application program for displaying information on the sub-display 116. It will be understood by persons skilled in the art that other suitable embodiments of the first method are possible.

As shown in FIG. 4, according to the example embodiment, if an application program outputs a use request (i.e., a request to use the sub-display 116) (S1) it is determined whether that use request is the first use request (S2). This determination is made possible, for example, by granting and maintaining "first requestor" status for an application which first issues a request for the use right and is granted the use right. The application may maintain this status until the status is cancelled, for example by a request from the application to cancel its first requestor status (see S7) .

If it is determined in step S2 that the use request from an application is the first use request (i.e., no application currently has first requestor status), the application program which output the use request is granted the use right (i.e., the right to use the sub-display 116) and gains first requestor status (S3).

If it is determined in step S2 that the use request is not the first use request (i.e., first requestor status has already been granted to another application), or if the use right is granted in step S3, it is determined whether the application program which output the use request has the use right (i.e., has first requestor status)(S4). If it is determined in step S4 that the application program does not have the use right, a use disable message is sent to the application program which output the use request (S5). Thus, the application program receiving the use disable message is prevented from using the sub-display 116.

On the other hand, if it is determined in step S4 that the application program has the use right (i.e., the application program has first requestor status), information managed by the application program which output the use request is written to the sub-display 116 (S6). After that, it is determined in step S7 if a use right cancel request (i.e., a request to cancel first requestor status) from the application program which has the use right is detected. If the use right cancel request is detected, first requestor status and the use right is canceled (S8), and the flow returns to step 31. If it is determined in step S7 that no cancel request is detected, the flow also returns to step 31.

With this exemplary method, the display on the sub-display 116 can be preferentially assigned to the application program which first outputs a use request for the sub-display 116.

This process will be further explained using the example shown in FIG. 3. In a state wherein neither of the application programs are granted the use right (i.e., neither has first requestor status), when the application program 31 is started and outputs a use request for the sub-display 16 (i.e., outputs the first use request for the sub-display 16), the use right arbitration program 33 grants the application program 31 the use right for the sub-display 116 and application program 31 has first requestor status.

After that, when the application program 32 is started and outputs a use request, since the application program 31 has already been granted the use right and has first requestor status, a message indicating that the sub-display 116 cannot be used is sent to the application program 32 and the application program 32 is prevented from using the sub-display 116.

For example, assume the application program 31 is a CD player program and the application program 32 is a wordprocessor program. Further assume that a window for each of these application programs is displayed on the display panel 121 (the main display), the CD player program window being the currently active window. Also, assume that the CD player program was the first to request the use right and was granted the use right. In this case, information that pertains to the CD player program is displayed on the sub-display 116.

Continuing with the present example, assume now that the window of the wordprocessor program becomes the active window on the main display. In this case, according to the present embodiment, even though the window of the wordprocessor program is the currently active window on the main display, the information that pertains to the CD player program continues to be displayed on the sub-display 116. This is because the CD player program was first granted the use right and has not yet requested that the use right be cancelled. Thus, the CD player program maintains the first requestor status. Therefore, if the wordprocessor program requested the use right for the sub-display 116, a message indicating that the sub-display 116 cannot be used by the wordprocessor program would be sent to the wordprocessor program and it would be prevented from using the sub-display 116.

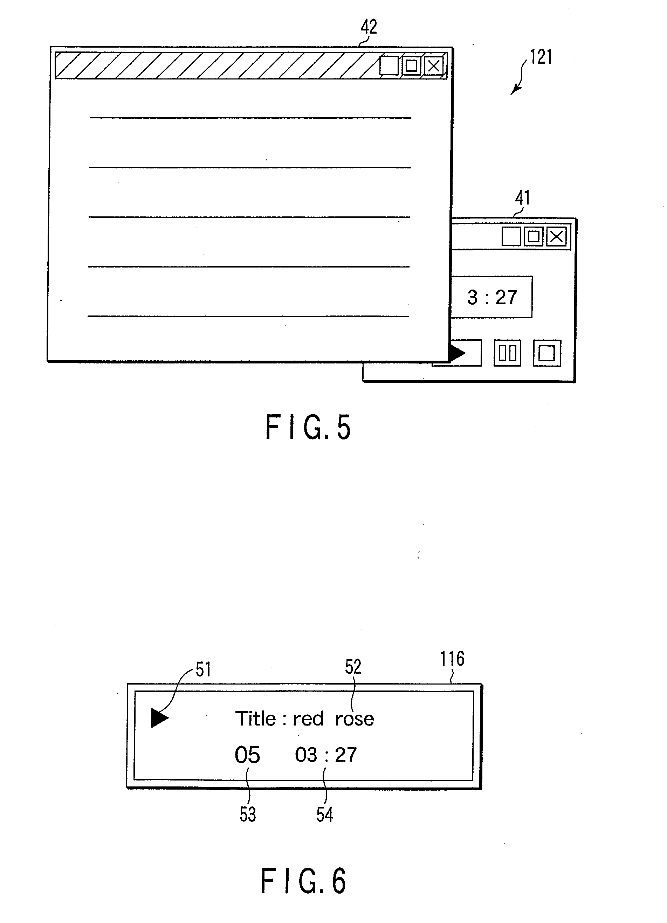

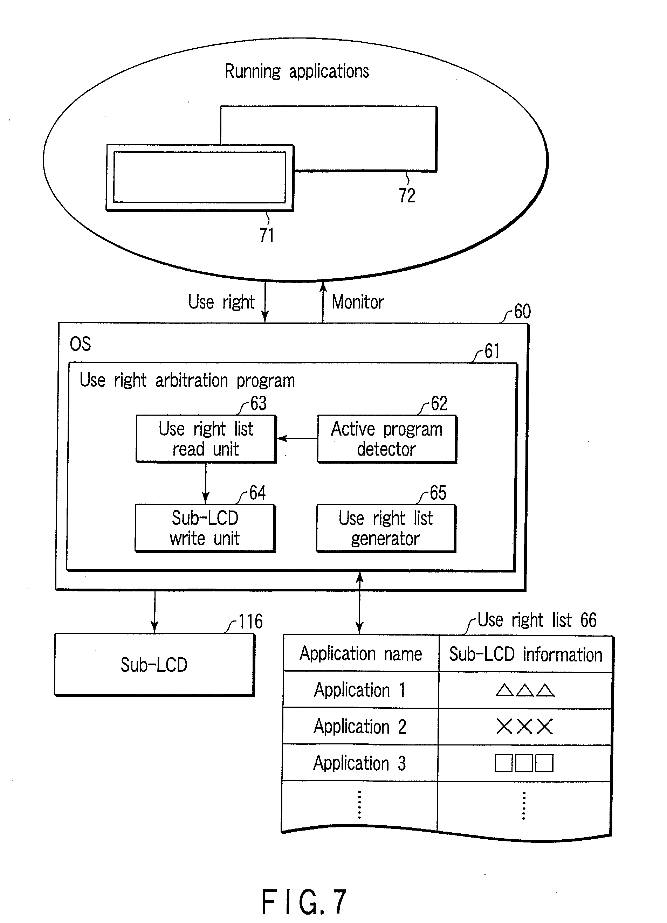

FIG. 5 illustrates the example discussed above. Window 41 of the CD player program (application program 31) is hidden behind a window 42 of the wordprocessor program (application program 32) displayed on the display panel 121. By starting the CD player program first, information that pertains to the CD player can be displayed on the sub-display 116, as shown in FIG. 6. Note that reference numeral 51 in FIG. 6 denotes an icon which indicates the current state, i.e., that playback is in progress. Reference numeral 52 denotes the title name of a CD, whose playback is underway; 53, a track number; and 54, the elapsed time of a song.

Therefore, according to embodiments of this method, even when the application is not active, the application program which first outputs the use request is granted the use right, and information that pertains to this application program can be displayed on the sub-display 116. Therefore, when the user is doing a job such as a document input job while listening to some music, he or she can confirm song information or the like on the sub-display 116.

FIG. 7 shows an exemplary embodiment of the second method of preferentially selecting an application program for displaying information on the sub-display 116. It will be understood by persons skilled in the art that other suitable embodiments of the second method are possible.

As shown in FIG. 7, a use right arbitration program 61 is a resident program of an OS 60 and comprises an active program detector 62, use right list read unit 63, sub-display write unit 64, and use right list generator 65. The active program detector 62 detects an active one of a plurality of running application programs. The use right list read unit 63 reads out sub-display information items associated with the active application program detected by the active program detector 62, and outputs the readout information to the sub-display write unit 64. The sub-display write unit 64 writes the sub-display information items output from the use right list read unit 63 to the sub-display 116.

Upon receiving a use request from one of the plurality of running application programs, the use right list generator 65 stores application program information items related to the application program which output the use request, such as, but not limited to, the application program's name. The use right list generator 65 also stores associated sub-display information items (i.e., information items which are related to the application program that outputs the use request and which information items are to be displayed on sub-display 116). According to one embodiment of the present invention, the application program information items and the sub-display information items are stored as a use right list 66 in the form of a data structure, such as, but not limited to, a data table, as shown in FIG. 7.

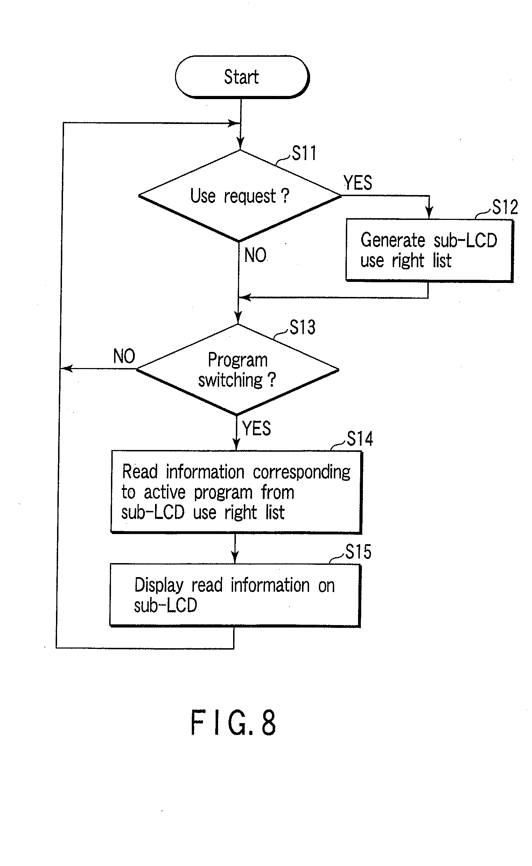

The operation of the information processing apparatus when an active application program is preferentially selected for displaying information on the sub-display 116, according to embodiments of the present invention, will be explained further below with reference to the flow chart of FIG. 8.

It is determined whether a use request from a running application program is detected (S11). If it is determined in step S11 that the use request is detected, a sub-display use right list is generated and stored in a memory such as, but not limited to, main memory 203.

The generated sub-display use right list includes application program information items related to the application program which output the use request such as, but not limited to, the application program's name. The generated sub-display use right list further includes sub-display information items which are associated with the application program which output the use request and which information items are to be displayed on the sub-display 116. The sub-display use right list may be stored such that the application program information items and the associated sub-display information items are stored in correspondence with each other, i.e., are associated with each other in a memory such as, but not limited to, main memory 203.

If it is determined in step S11 that no use request is detected, or after the sub-display use right list is generated in step S12, it is determined by a program switching program whether the running application programs are switched (i.e., whether or not a different one of the plurality of running application programs has become the currently active application program) (S13).

If it is determined in step S13 that no application program switching is done, the flow returns to step S11. On the other hand, if it is determined in step S13 that program switching is done (i.e., there is a new currently active application program), sub-display information items associated with the new currently active application program is read out from the sub-display use right list (S14). The read out sub-display information items are written to the sub-display (S15), and the flow returns to step S11.

The above-described read out of sub-display information items from the sub-display use right list assumes that the sub-display information items for a new currently active application program that are read out were earlier stored in memory as a part of the sub-display use right list. If this is not the case, for example if the new currently active application program has just started to run, the sub-display information items for the new currently active application program would first be stored in memory as a part of the sub-display use right list, as described above, before being read out.

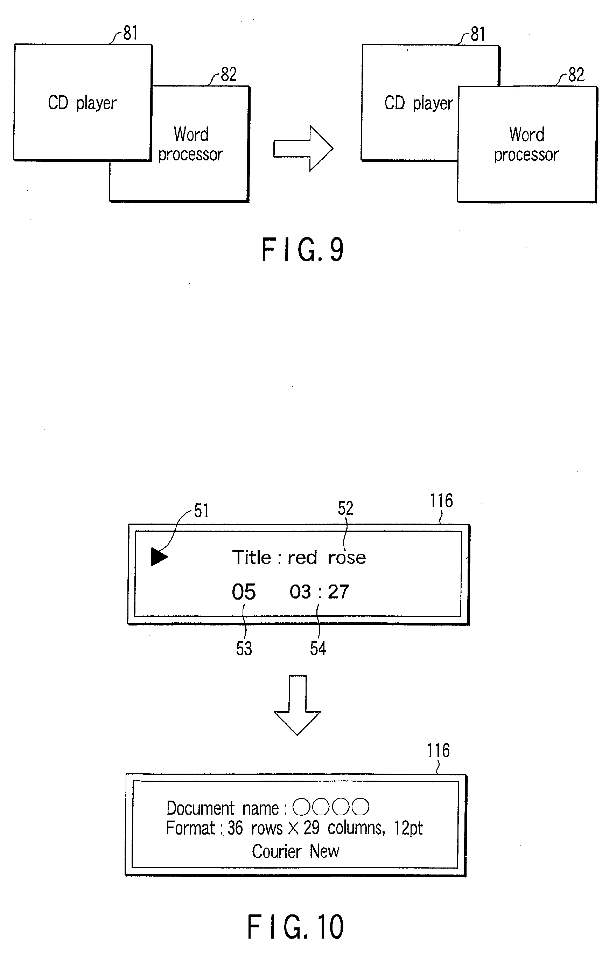

FIG. 9 illustrates an embodiment of the second method discussed above. Referring to the left side of FIG. 9, it is shown that window 81 on the main display is that of a CD player program that is currently active. Window 82 on the main display is that of an inactive wordprocessor program. Referring to the top of FIG. 10, it is shown that in this case the sub-display 116 displays information associated with the currently active CD player program.

Continuing with the present example and referring to the right side of FIG. 9, it is shown that the wordprocessor program is switched to the new currently active application program while the CD player program becomes inactive. Referring to the bottom of FIG. 10, it is shown that in this case the sub-display 116 now displays information associated with the new currently active wordprocessor program in place of the information associated with the now inactive CD player program.

According to this method, the application program which uses the sub-display can be dynamically switched in response to switching of running application programs. In this manner, the number of such application programs is not limited to one.

Note that the present invention is not limited to the aforementioned embodiments, and various modifications may be made without departing from the scope of the invention when it is practiced. The respective embodiments may be combined as needed as much as possible, and combined effects can be obtained in such case. Furthermore, the embodiments include inventions of various stages, and various inventions can be extracted by appropriately combining a plurality of required constituent elements disclosed in this application. For example, when the invention is extracted by omitting some required constituent elements from all the required constituent elements in the embodiments, the extracted elements are compensated for by the state-of-the-art technique upon practicing the extracted invention.

## Claims

1. An information processing apparatus **characterized by** comprising:
a first means (121) for displaying information;
a second means (116) for displaying information, the second means being separate from the first means;
means (33) for granting a right to use the second means to a first software program, among a plurality of software programs, which first outputs a request to use the second means;
means (33, 34) for displaying information managed by the first software program on the second means; and
means (33) for preventing a second software program, among the plurality of software programs, from using the second means while the first software program has the right to use the second means.

2. The apparatus according to claim 1, **characterized in that** the second software program is prevented from using the second means by receiving a message indicating that the second means cannot be used.

3. The apparatus according to claim 2, **characterized in that** the message is received in response to a request from the second software program to use the second means.

4. The apparatus according to claim 1, **characterized by** further comprising means for canceling the right to use the second means granted to the first software program.

5. The apparatus according to claim 4, **characterized in that** the right to use the second means is cancelled in response to a request to cancel the right to use the second means.

6. The apparatus according to claim 5, **characterized in that** the request to cancel the right to use the second means is sent from the first software program.

7. An information processing apparatus **characterized by** comprising:
a first means for displaying information;
a second means for displaying information, the second means being separate from the first means;
means for generating, for a plurality of running software programs, a data structure, the data structure including:
a plurality of first information items, each related to individual ones of the plurality of software programs; and
a plurality of second information items for display on the second means, ones of the plurality of second information items being associated in the data structure with ones of the plurality of first information items;
means for detecting an active one of the plurality of software programs; and
means for displaying on the second means ones of the second information items associated with ones of the first information items related to the active one of the plurality of software programs.
